# EUROPEAN PATENT APPLICATION

(11) **EP 3 388 754 A1**
(43) Date of publication of application: **17.10.2018**
(21) Application number: 15910179.9
(22) Date of filing: 07.12.2015
(51) Int. Cl.: F24F 7/007, F24F 11/77, F24F 11/75, F24F 11/32, F24F 11/89

(54) **VENTILATION SYSTEM AND CONTROLLER**

(71) Applicant: Mitsubishi Electric Corporation, Chiyoda-ku Tokyo 100-8310 (JP)
(72) Inventor: YASUDA, Masami, Tokyo 100-8310 (JP); ASHINO, Masashi, Tokyo 100-8310 (JP); ARAI, Hidemoto, Tokyo 100-8310 (JP)
(74) Representative: Moore, Graeme Patrick
(86) International application number: PCT/JP2015/084304
(87) International publication number: WO 2017/098562

(57) **Abstract**

A ventilation system includes: a plurality of ventilation apparatuses (1a, 1b, 1c, 1d, 1e) that have operation power in a plurality of notches; and a central controller (3) to control the ventilation apparatuses (1a, 1b, 1c, 1d, 1e). The central controller (3) comprises a control unit to perform control such that, when interruption of any of the ventilation apparatuses (1a, 1b, 1c, 1d, 1e) is detected, operation power of a ventilation apparatus that is not interrupted among the ventilation apparatuses (1a, 1b, 1c, 1d, 1e) is raised and, when resolution of the interruption of the any of the ventilation apparatuses (1a, 1b, 1c, 1d, 1e) is detected, the operation power of the ventilation apparatus (1a, 1b, 1c, 1d, 1e) is restored to the operation power used before raising.

Accordingly, the present invention produces an effect of enabling inhibition of a reduction in amount of ventilation in a room space when any of the ventilation apparatuses is interrupted.

## Description

### Field

The present invention relates to a ventilation system that includes a plurality of ventilation apparatuses and a controller that controls the ventilation apparatuses and to the controller.

### Background

A conventional ventilation apparatus as described in Patent Literature 1 performs for product protection a protection operation that interrupts a supply air fan or executes an intermittent operation control that repeats operation and interruption of the supply air fan alternately in accordance with a state detected by a sensor that is installed inside the apparatus and detects condensation or high humidity.

### Citation List

### Patent Literature

Patent Literature 1: Japanese Patent Application Laid-open No. 2009-293880

### Summary

### Technical Problem

The conventional technique described in Patent Literature 1 poses a problem that the amount of outside air introduced decreases during the interruption or the intermittent interruption of the supply air fan and this causes degradation in air environment in a room. Even if another ventilation apparatus is operating in the same room, a necessary amount of ventilation cannot be obtained unless the amount of ventilation from the apparatus interrupted for the protection operation is made up for.

The present invention has been achieved in view of the above, and an object of the present invention is to provide a ventilation system that can inhibit a reduction in amount of ventilation in a room space when any of ventilation apparatuses is interrupted.

### Solution to Problem

To solve the problem described above and achieve the object described above, an aspect of the present invention provides a ventilation system including: a plurality of ventilation apparatuses that have operation power in a plurality of notches; and a controller to control the ventilation apparatuses. The controller comprises a control unit to perform control such that, when interruption of any of the ventilation apparatuses is detected, operation power of a ventilation apparatus that is not interrupted among the ventilation apparatuses is raised and, when resolution of the interruption of the any of the ventilation apparatuses is detected, the operation power of the ventilation apparatus is restored to the operation power used before raising.

### Advantageous Effects of Invention

The ventilation system according to the present invention produces an effect of enabling inhibition of a reduction in amount of ventilation in a room space when any of ventilation apparatuses is interrupted.

### Brief Description of Drawings

FIG. 1 is a diagram illustrating the configuration of a ventilation system according to a first embodiment of the present invention.
FIG. 2 is a diagram illustrating for each model a relationship between operation power and amounts of airflow of the ventilation apparatuses included in the ventilation system according to the first embodiment.
FIG. 3 is a functional block diagram of a central controller in the ventilation system according to the first embodiment.
FIG. 4 is a diagram illustrating a configuration with which a function of the central controller in the ventilation system according to the first embodiment is achieved with hardware.
FIG. 5 is a diagram illustrating a configuration with which a function of the central controller in the ventilation system according to the first embodiment is achieved with software.
FIG. 6 is a flowchart illustrating a flow of an operation of the ventilation system according to the first embodiment.
FIG. 7 is a functional block diagram of a central controller in a ventilation system according to a second embodiment.
FIG. 8 is a diagram illustrating amount-of-airflow information on the ventilation system according to the second embodiment.
FIG. 9 is a diagram illustrating an example combination of the operation powers of the ventilation system according to the second embodiment.
FIG. 10 is a diagram illustrating another example combination of the operation powers of the ventilation system according to the second embodiment.
FIG. 11 is a functional block diagram of a central controller in a ventilation system according to a third embodiment.
FIG. 12 is a diagram illustrating an arrangement of ventilation apparatuses of the ventilation system according to the third embodiment.

### Description of Embodiments

A ventilation system and a controller according to embodiments of the present invention are described below in detail with reference to the drawings. The present invention is not limited to the embodiments.

### First embodiment.

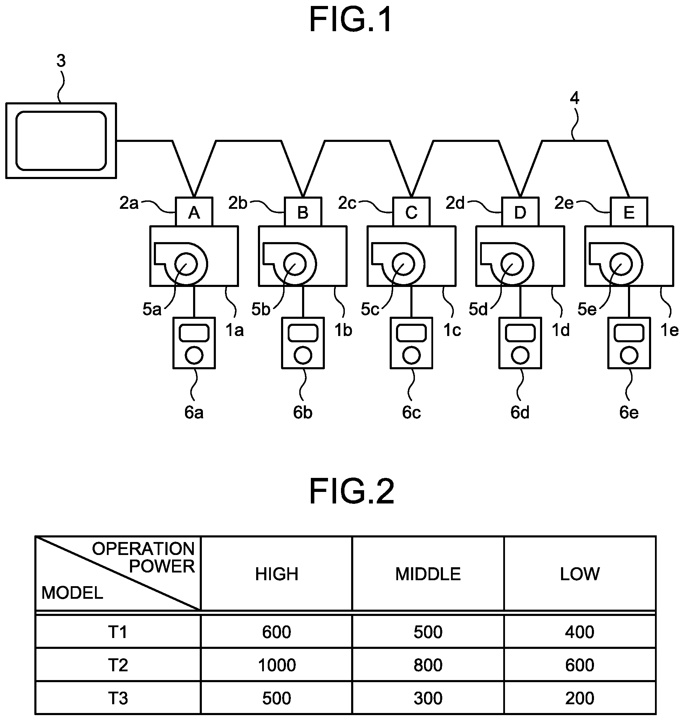

FIG. 1 is a diagram illustrating the configuration of a ventilation system according to a first embodiment of the present invention. Ventilation apparatuses 1a, 1b, 1c, 1d, and 1e are placed in the ventilation system. Control circuits 2a, 2b, 2c, 2d, and 2e are integrated into the ventilation apparatuses 1a, 1b, 1c, 1d, and 1e, respectively. The ventilation apparatuses 1a, 1b, 1c, 1d, and 1e include fans 5a, 5b, 5c, 5d, and 5e that generate airflows, respectively. A central controller 3 that is a controller that controls the ventilation apparatuses 1a, 1b, 1c, 1d, and 1e is connected to the ventilation apparatuses 1a, 1b, 1c, 1d, and 1e with a communication cable 4. While FIG. 1 illustrates an example in which the five ventilation apparatuses 1a, 1b, 1c, 1d, and 1e are connected, the number of ventilation apparatuses is not limited to five and may be any number as long as it is two or more.

Each of the control circuits 2a, 2b, 2c, 2d, and 2e, which is integrated into a corresponding one of the ventilation apparatuses 1a, 1b, 1c, 1d, and 1e, detects a failure of a corresponding one of the fans 5a, 5b, 5c, 5d, and 5e. When a failure of any one of the fans 5a, 5b, 5c, 5d, and 5e is detected, a corresponding one of the control circuits 2a, 2b, 2c, 2d, and 2e displays the failure as an abnormality in a corresponding one of local remote controllers 6a, 6b, 6c, 6d, and 6e and communicates abnormality information, together with a corresponding one of address numbers A, B, C, D, and E that are assigned to the ventilation apparatuses 1a, 1b, 1c, 1d, and 1e, to the central controller 3 via the communication cable 4. That is, when a failure of any one of the fans 5a, 5b, 5c, 5d, and 5e is detected, a corresponding one of the control circuits 2a, 2b, 2c, 2d, and 2e notifies the central controller 3 of the failure occurred in the corresponding one of the ventilation apparatuses 1a, 1b, 1c, 1d, and 1e. The address number assigned to the ventilation apparatus 1a is A; the address number assigned to the ventilation apparatus 1b is B; the address number assigned to the ventilation apparatus 1c is C; the address number assigned to the ventilation apparatus 1d is D; and the address number assigned to the ventilation apparatus 1e is E. The letters A, B, C, D, and E in FIG. 1 in frames that represent the control circuits 2a, 2b, 2c, 2d, and 2e signify the respective address numbers assigned.

The central controller 3 can receive information from the ventilation apparatuses 1a, 1b, 1c, 1d, and 1e, which are connected to the communication cable 4. The central controller 3 can also transmit commands to the ventilation apparatuses 1a, 1b, 1c, 1d, and 1e via the communication cable 4.

Each of the ventilation apparatuses 1a, 1b, 1c, 1d, and 1e also includes a unit that changes the amount of airflow provided by a fan motor of a corresponding one of the fans 5a, 5b, 5c, 5d, and 5e. The amounts of airflow can be changed by an operation using the local remote controllers 6a, 6b, 6c, 6d, and 6e or the central controller 3. The central controller 3 can also provide a command to perform control at a fixed amount of airflow.

FIG. 2 is a diagram illustrating for each model a relationship between operation power and the amounts of airflow of the ventilation apparatuses included in the ventilation system according to the first embodiment. Numerical values in FIG. 2 represent the amounts of airflow in m³/h. Each of the ventilation apparatuses 1a, 1b, 1c, 1d, and 1e is of any one of models T1, T2 or T3. Any model of the ventilation apparatus can be operated in three levels of operation power, namely "high", "middle", and "low" as illustrated in the table of FIG. 2. That is, the ventilation apparatuses 1a, 1b, 1c, 1d, and 1e each have operation power in a plurality of notches. The power can be adjusted to "high", "middle", or "low" using the local remote controllers 6a, 6b, 6c, 6d, and 6e and the central controller 3. The amount of airflow is typically set to a rated amount of airflow for "middle" operation power, to an amount of airflow greater than the "middle" operation power, which is the rated amount of airflow, for "high" operation power, and to an amount of airflow smaller than the "middle" operation power, which is the rated amount of airflow, for "low" operation power. The amounts of airflow produced by a ventilation apparatus of the model T1 are 600 m³/h for the "high" operation power, 500 m³/h for the "middle" operation power, and 400 m³/h for the "low" operation power. The amounts of airflow produced by a ventilation apparatus of the model T2 are 1000 m³/h for the "high" operation power, 800 m³/h for the "middle" operation power, and 600 m³/h for the "low" operation power. The amounts of airflow produced by a ventilation apparatus of the model T3 are 500 m³/h for the "high" operation power, 300 m³/h for the "middle" operation power, and 200 m³/h for the "low" operation power.

The ventilation apparatuses 1a, 1b, 1c, 1d, and 1e that configure the ventilation system, together with the central controller 3, are of multiple models used in combination. Models are often classified according to their rated amounts of airflow. In the first embodiment, ventilation apparatuses of the model T1 are used as the ventilation apparatuses 1a and 1d; a ventilation apparatus of the model T2 is used as the ventilation apparatus 1b; and ventilation apparatuses of the model T3 are used as the ventilation apparatuses 1c and 1e. Ventilation apparatuses having different rated amounts of airflow are generally used in combination to configure a ventilation system in accordance with the size of a room space.

While the ventilation system according to the first embodiment is configured from the ventilation apparatuses 1a, 1b, 1c, 1d, and 1e of multiple models in combination, a ventilation system may be configured from ventilation apparatuses of an identical model alone.

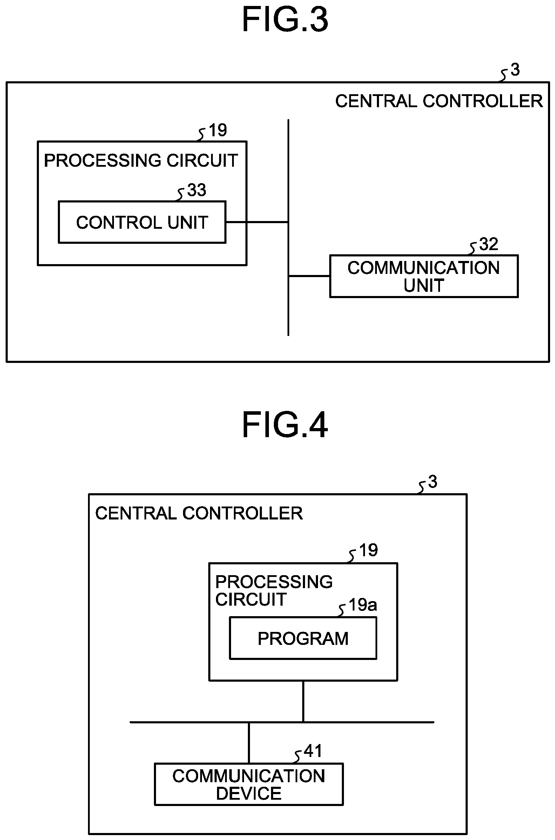

FIG. 3 is a functional block diagram of the central controller in the ventilation system according to the first embodiment. The central controller 3 includes a communication unit 32 that is a communication interface with the ventilation apparatuses 1a, 1b, 1c, 1d, and 1e and a control unit 33 that performs a steady-state operation when all the ventilation apparatuses 1a, 1b, 1c, 1d, and 1e are operated and performs a non-steady-state mode operation when any of the ventilation apparatuses 1a, 1b, 1c, 1d, and 1e is interrupted.

A function of the control unit 33 is achieved with a processing circuit 19. That is, the central controller 3 includes the processing circuit 19, which performs the non-steady-state mode operation when any of the ventilation apparatuses 1a, 1b, 1c, 1d, and 1e is interrupted. The processing circuit 19 may be dedicated hardware or an arithmetic unit that executes a program stored in a memory.

When the processing circuit 19 is dedicated hardware, the processing circuit 19 may be a single circuit, a compound circuit, a programmed processor, a parallel programmed processor, an application specific integrated circuit, a field programmable gate array, or a combination of them. FIG. 4 is a diagram illustrating a configuration with which a function of the central controller in the ventilation system according to the first embodiment is achieved with hardware. A program 19a that achieves the control unit 33 is integrated into the processing circuit 19 in the form of a logical circuit. A communication device 41 is a device that achieves the communication unit 32.

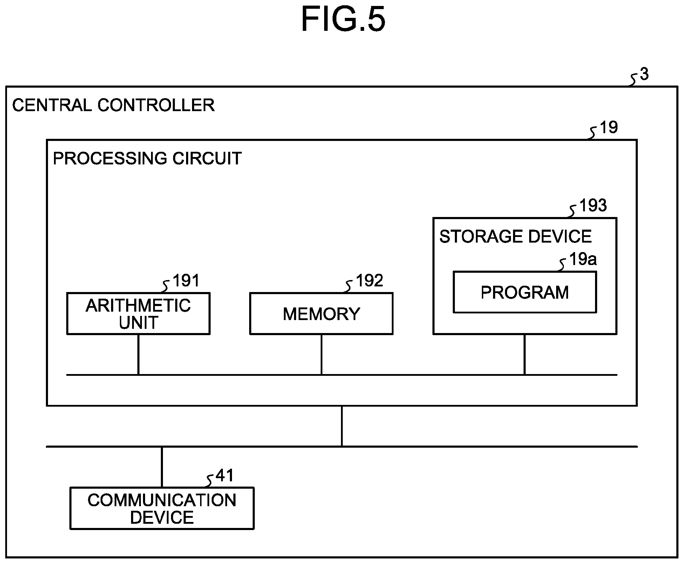

When the processing circuit 19 is an arithmetic unit, a function of the control unit 33 is achieved with software, firmware, or a combination of software and firmware. FIG. 5 is a diagram illustrating a configuration with which a function of the central controller in the ventilation system according to the first embodiment is achieved with software. The processing circuit 19 includes an arithmetic unit 191 that executes the program 19a, a memory 192 that the arithmetic unit 191 uses as a work area, and a storage device 193 that stores the program 19a. The control unit 33 is achieved when the arithmetic unit 191 loads the program 19a, which is stored in the storage device 193, onto the memory 192 and executes the program 19a. The software or firmware is described in a program language and stored in the storage device 193. The processing circuit 19 achieves a function of the control unit 33 by reading and executing the program 19a, which is stored in the storage device 193. That is, the central controller 3 includes the storage device 193 for storing the program 19a, which, when executed by the processing circuit 19, results in execution of steps of performing the steady-state operation when all the ventilation apparatuses 1a, 1b, 1c, 1d, and 1e are operated and performing the non-steady-state mode operation when any of the ventilation apparatuses 1a, 1b, 1c, 1d, and 1e is interrupted. In other words, the program 19a causes a computer to execute a procedure and a method of the control unit 33. The communication device 41 is a device that achieves the communication unit 32.

Some of the functions of the control unit 33 may be achieved by dedicated hardware and others may be achieved by software or firmware. For example, some of the functions of the control unit 33 can be achieved using a processing circuit in the form of dedicated hardware, and the remaining functions of the control unit 33 can be achieved by a processing circuit reading and executing a program stored in a memory.

As described above, the processing circuit 19 can achieve each of the functions described above using hardware, software, firmware, or a combination of them.

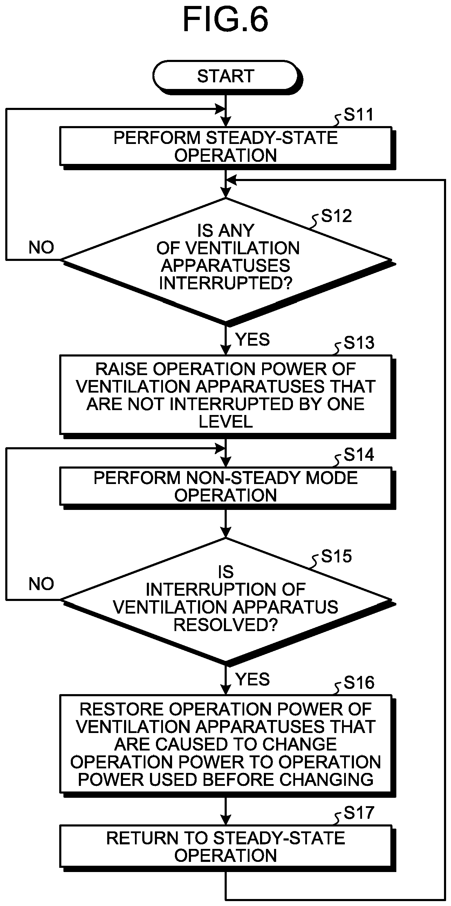

An operation of the ventilation system according to the first embodiment is described next. FIG. 6 is a flowchart illustrating a flow of an operation of the ventilation system according to the first embodiment. The control unit 33 provides in step S11 a command to operate at the "middle" operation power to the ventilation apparatuses 1a, 1b, 1c, 1d, and 1e to perform the steady-state operation. The ventilation apparatuses 1a, 1b, 1c, 1d, and 1e are operated at the "middle" operation power in the steady state; thus, the amount of ventilation provided into the room space is 2400 m³/h in total.

The control unit 33 determines in step S12 whether or not any of the ventilation apparatuses 1a, 1b, 1c, 1d, and 1e is interrupted. If none of the ventilation apparatuses 1a, 1b, 1c, 1d, and 1e is interrupted, no is selected in step S12 and the flowchart proceeds to step S11, where the steady-state operation is performed. If any of the ventilation apparatuses 1a, 1b, 1c, 1d, and 1e is interrupted, yes is selected in step S12 and the flowchart proceeds to step S13.

The control unit 33 transmits in step S13 a command to raise the operation power by one level to the operating ventilation apparatus(es) among the ventilation apparatuses 1a, 1b, 1c, 1d, and 1e. That is, the control unit 33 causes the operating ventilation apparatus(es) among the ventilation apparatuses 1a, 1b, 1c, 1d, and 1e to raise the operation power by one level. In this manner, the ventilation system performs in step S14 the non-steady-state mode operation.

The control unit 33 determines in step S15 whether resolution of the interruption of the ventilation apparatuses 1a, 1b, 1c, 1d, and 1e is detected. If the interruption of the ventilation apparatuses 1a, 1b, 1c, 1d, and 1e is not resolved, no is selected in step S15 and the flowchart proceeds to step S14, where the non-steady-state mode operation is continued. If the interruption of the ventilation apparatuses 1a, 1b, 1c, 1d, and 1e is resolved, yes is selected in step S15 and the flowchart proceeds to step S16.

The control unit 33 transmits in step S16 a command to lower the operation power by one level to the ventilation apparatus(es) caused to change the operation power in step S13 among the ventilation apparatuses 1a, 1b, 1c, 1d, and 1e. That is, the control unit 33 restores the operation power of the ventilation apparatus(es) caused to change the operation power in step S13 among the ventilation apparatuses 1a, 1b, 1c, 1d, and 1e to the operation power used before changing. In this manner, the ventilation apparatuses 1a, 1b, 1c, 1d, and 1e are caused in step S17 to operate at the "middle" operation power and the ventilation system returns to the steady-state operation. After step S17, the flowchart proceeds to step S12.

As a specific example, when the fan 5a, which is placed in the ventilation apparatus 1a, is interrupted due to a failure, the control circuit 2a detects the abnormality in the fan 5a, displays the abnormality information in the local remote controller 6a, and transmits the abnormality information to the central controller 3 via the communication cable 4. The interruption of the ventilation apparatus 1a leads to a reduction in amount of airflow for ventilation in the room space by 500 m³/h, which is the rated amount of airflow of the ventilation apparatus 1a, causing the amount of ventilation supplied into the room to be 1900 m³/h.

When the control unit 33 receives the abnormality information transmitted by the control circuit 2a, the central controller 3 determines that the number of connected ventilation units is reduced and transmits a command to the ventilation apparatuses 1b, 1c, 1d, and 1e to perform a non-steady-state operation mode in which the amounts of airflow provided by the ventilation apparatuses 1b, 1c, 1d, and 1e that have no abnormality are raised by one level. In the first embodiment, a command to raise the operation power of the ventilation apparatuses 1b, 1c, 1d, and 1e by one level from "middle" to "high" is transmitted. The amount of airflow supplied into the room becomes 2600 m³/h; thus, a state in which the amount of ventilation supplied into the room is lower than the amount of ventilation of the steady state operation is resolved even though the ventilation apparatus 1a is interrupted.

When the abnormality information is not received any longer from the ventilation apparatus 1a due to replacement or the like of the fan 5a, that is, when the control unit 33 is notified by the control circuit 2a that the failure is resolved, the control unit 33 transmits a command to the ventilation apparatuses 1b, 1c, 1d, and 1e that have not generated abnormality information to restore the operation power of the ventilation apparatuses 1b, 1c, 1d, and 1e that has been raised to "high" to the "middle" operation power. The amount of airflow becomes 2400 m³/h, which is the steady state condition, and a necessary and sufficient amount of ventilation is provided.

As described above, when a ventilation apparatus in a room space cannot continue the ventilation operation, the amount of airflow of a remaining ventilation apparatus that can continue the ventilation operation is temporarily raised so as to inhibit a reduction in amount of ventilation in the room space, thereby room comfort can be maintained.

Additionally, when the ventilation apparatus detects condensation or high humidity intake and causes the fan 5a to stop operating temporarily or to start intermittent operation control, the ventilation apparatus 1a can transmit stop information or intermittent operation control information to the central controller 3, which then raises the operation power of the remaining ventilation apparatuses 1b, 1c, 1d, and 1e that have not stopped or are not experiencing intermittent operation control, thereby a reduction in amount of ventilation in a room space can be inhibited.

When the ventilation apparatus 1a detects elimination of the condensation or high humidity intake, the temporary stop or the intermittent operation control of the ventilation apparatus 1a is ended, and thereby the amount of airflow is restored to a level provided before the control. The control unit 33 restores the amounts of airflow of the ventilation apparatuses 1b, 1c, 1d, and 1e that have been temporarily raised by one level to the amounts of airflow provided before raising, and thereby can satisfy both product protection against condensation or high humidity when it is detected and a reduction in amount of ventilation in a room space.

Additionally, when transmission of electric power to the ventilation apparatus 1a is interrupted due to product update of the ventilation apparatus 1a or energization of the ventilation apparatus 1a is interrupted due to a power outage, the central controller 3 can detect the interruption of the transmission of the electric power or the power outage and raise the amounts of airflow by one level of the other ventilation apparatuses that are energized and operated normally so as to inhibit a reduction in amount of ventilation in the room space, thereby room comfort can be maintained. When the interruption of the energization of the ventilation apparatus 1a is resolved, the ventilation apparatus 1a starts operating to provide the amount of airflow provided before the interruption, and the control unit 33 restores the amounts of airflow of the ventilation apparatuses 1b, 1c, 1d, and 1e that have been temporarily raised by one level to the amounts of airflow provided before raising.

As described above, according to the first embodiment, the central controller detects a ventilation apparatus that cannot perform a blowing operation due to a failure, a temporary stop, or an intermittent operation control and raises the amount of airflow temporarily by one level of another ventilation apparatus that is operating, and thereby it is possible to maintain room comfort where a shortage of the amount of airflow for the ventilation in the room space is avoided, a necessary amount of ventilation can be satisfied, and a necessary amount of fresh outside air is provided. When a ventilation apparatus that cannot perform a blowing operation due to a failure, a temporary stop, or an intermittent operation control is detected, the amount of airflow of another ventilation apparatus that is operating may be raised by two levels or more.

### Second embodiment.

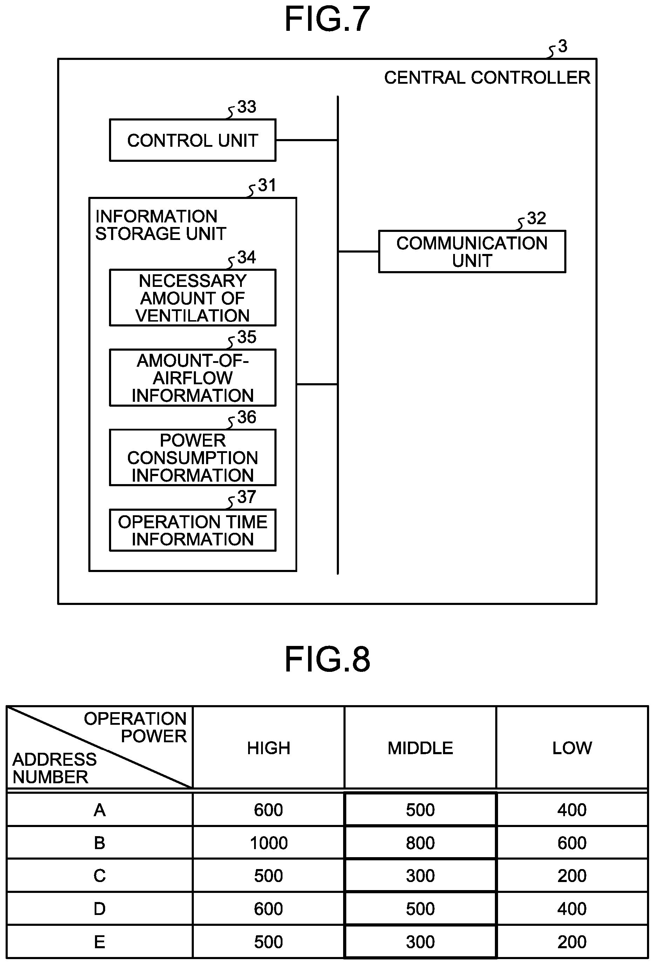

FIG. 7 is a functional block diagram of a central controller in a ventilation system according to a second embodiment. The configuration of the ventilation system according to the second embodiment is similar to the configuration of the ventilation system according to the first embodiment, except that the central controller 3 includes an information storage unit 31 that stores amounts of airflow that correspond to operation power of the ventilation apparatuses 1a, 1b, 1c, 1d, and 1e and that the control unit 33 switches an amount of airflow of a ventilation apparatus to be raised temporarily in accordance with the amount of airflow of another ventilation apparatus that cannot be operated temporarily. That is, in the second embodiment, when any of the ventilation apparatuses 1a, 1b, 1c, 1d, and 1e is interrupted, the control unit 33 selects a combination of operation powers that maintains an amount of airflow for ventilation that is provided before any of the ventilation apparatuses 1a, 1b, 1c, 1d, and 1e is interrupted, instead of raising by one level the operation power of all the ventilation apparatuses that are not interrupted.

The information storage unit 31 stores therein a necessary amount of ventilation 34 that is obtained from the volume of a room space for installation, which is calculated from the area and height of the room space, and the number of people in the room. The volume information may be automatically calculated from a layout drawing of the ventilation apparatuses and air conditioners that is created in advance and height information; alternatively, space information may be input at discretion. In a similar manner, the number of people in the room may be input at discretion or may be actually measured using a human presence sensor.

The information storage unit 31 also stores therein amount-of-airflow information 35 at the "high", "middle", and "low" operation power of the ventilation apparatuses 1a, 1b, 1c, 1d, and 1e. FIG. 8 is a diagram illustrating the amount-of-airflow information on the ventilation system according to the second embodiment. In FIG. 8, selected operation powers of the ventilation apparatuses 1a, 1b, 1c, 1d, and 1e are surrounded by thick frames. The control unit 33 determines that a state in which the ventilation apparatuses 1a, 1b, 1c, 1d, and 1e operate at the "middle" operation power is the steady-state operation that can maintain the necessary amount of ventilation 34 on the basis of the necessary amount of ventilation 34 and the amount-of-airflow information 35. The amount of airflow for ventilation in the steady state is 2400 m³/h.

The information storage unit 31 also stores therein power consumption information 36 that indicates power consumption at each level of the operation power of the ventilation apparatuses 1a, 1b, 1c, 1d, and 1e.

The information storage unit 31 also stores therein operation history information 37 that indicates at which level of the operation power the ventilation apparatuses 1a, 1b, 1c, 1d, and 1e are operated for how long. Thus, the information storage unit 31 is also an operation history information storage unit that stores the operation history information 37.

Generally, the ventilation apparatuses 1a, 1b, 1c, 1d, and 1e are operated at the "middle" operation power in the steady state and the respective levels of operation power are switched to "high" or "low" in accordance with an air dirtiness condition in a room.

When the operation of the fan 5a placed in the ventilation apparatus 1a is interrupted due to a failure, the control unit 33 receives abnormality information and calculates a deficit in the amount of ventilation supplied into the room on the basis of the amount-of-airflow information 35. In the second embodiment, the control unit 33 determines that the present amount of ventilation is 1900 m³/h and a deficit in the amount of ventilation is 500 m³/h.

The control unit 33 selects a combination of the "high", "middle", and "low" operation powers of the ventilation apparatuses 1b, 1c, 1d, and 1e that have no abnormality in such a manner that the combination produces an amount of ventilation that is equal to or greater than the deficit in the amount of ventilation and the closest to the deficit in the amount of ventilation. Specifically, the control unit 33 selects a combination of the operation powers of the ventilation apparatuses 1b, 1c, 1d, and 1e in such a manner that the amount of airflow increased by changing the combination is equal to or greater than the deficit in the amount of ventilation, which is 500 m³/h, and is the closest to 500 m³/h.

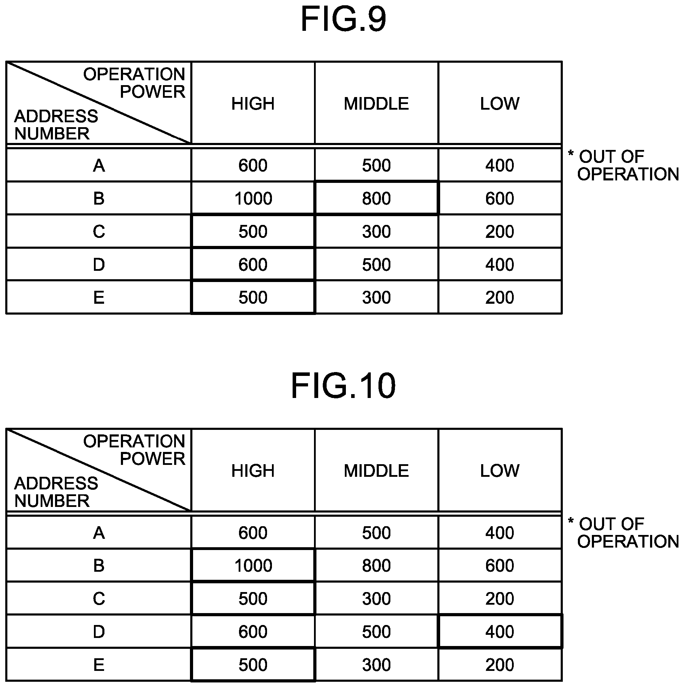

FIG. 9 is a diagram illustrating an example combination of the operation powers of the ventilation system according to the second embodiment. In FIG. 9, selected operation powers of the ventilation apparatuses 1b, 1c, 1d, and 1e are surrounded by thick frames. In the second embodiment, 500 m³/h of airflow in amount can be secured by causing the ventilation apparatus 1b to be operated at the "middle" operation power and the ventilation apparatuses 1c, 1d, and 1e to be operated at the "high" operation power as illustrated in FIG. 9.

FIG. 10 is a diagram illustrating another example combination of the operation powers of the ventilation system according to the second embodiment. In FIG. 10, selected operation powers of the ventilation apparatuses 1b, 1c, 1d, and 1e are surrounded by thick frames. As illustrated in FIG. 10, 500 m³/h of airflow in amount can be also secured by causing the ventilation apparatuses 1b, 1c, and 1e to be operated at the "high" operation power and the ventilation apparatus 1d to be operated at the "low" operation power.

If priority is given to optimization of power consumption when determining which combination is used for operation, the control unit 33 may select a combination that minimizes the total power consumption of the ventilation apparatuses 1a, 1b, 1c, 1d, and 1e on the basis of the power consumption information 36. To level loads applied to the fans 5a, 5b, 5c, 5d, and 5e of the ventilation apparatuses 1a, 1b, 1c, 1d, and 1e, the control unit 33 may select a combination that minimizes the total operating time at the "high" operation power, at which the number of rotations is increased, on the basis of the operation history information 37. That is, a combination in which a ventilation apparatus that has operated at the "high" operation power for a long time is not caused to operate at the "high" operation power may be preferentially selected.

As described above, according to the second embodiment, the control unit 33 selects a combination of the operation powers of the ventilation apparatuses 1a, 1b, 1c, 1d, and 1e on the basis of the amount-of-airflow information 35, the power consumption information 36, and the operation history information 37, thereby enabling a reduction in power consumption and equalization of the operating loads of the ventilation apparatuses 1a, 1b, 1c, 1d, and 1e while making up for a deficit in the amount of ventilation due to an interruption of any of the ventilation apparatuses 1a, 1b, 1c, 1d, and 1e.

### Third embodiment.

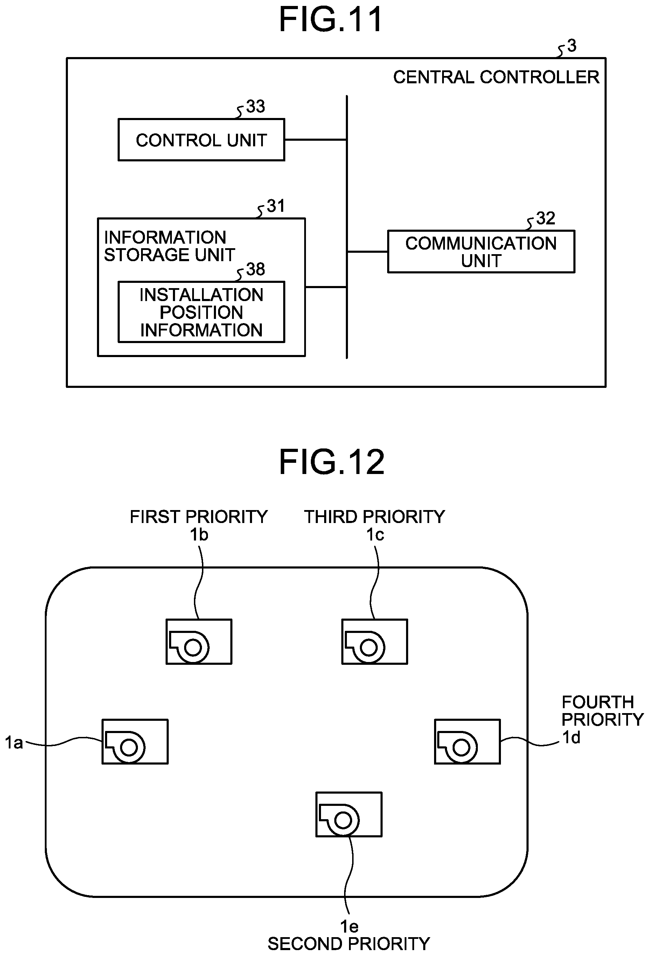

FIG. 11 is a functional block diagram of a central controller in a ventilation system according to a third embodiment. The configuration of the ventilation system according to the third embodiment is similar to the configuration of the ventilation system according to the first embodiment, except that the central controller 3 includes the information storage unit 31 that stores installation position information 38 that indicates the installation positions of the ventilation apparatuses 1a, 1b, 1c, 1d, and 1e and that the control unit 33 determines which of the ventilation apparatuses 1a, 1b, 1c, 1d, and 1e should be caused to raise the operation power on the basis of the distance between the ventilation apparatuses 1a, 1b, 1c, 1d, and 1e. Thus, the information storage unit 31 is also an installation position information storage unit that stores the installation position information 38 in the third embodiment.

The information storage unit 31 stores therein the installation position information 38 on the ventilation apparatuses 1a, 1b, 1c, 1d, and 1e. In the event of a failure of the ventilation apparatus 1a, the control unit 33 assigns priority to the ventilation apparatuses in increasing order of distance from the ventilation apparatus 1a on the basis of the installation position information 38.

FIG. 12 is a diagram illustrating an arrangement of the ventilation apparatuses of the ventilation system according to the third embodiment. The distance from the ventilation apparatus 1a increases in the following order: the ventilation apparatuses 1b, 1e, 1c, and 1d.

The control unit 33 causes the ventilation apparatuses 1b, 1c, 1d, and 1e to operate using a combination of the operation powers in which the ventilation apparatus 1b, which is the closest to the ventilation apparatus 1a, is operated at the "high" operation power on a priority basis. In this manner, ventilation is enabled with a large amount of airflow also in a space near the ventilation apparatus 1a that is interrupted; thus, unevenness in ventilation is eliminated in the room space and thereby comfort can be maintained.

As described above, the ventilation apparatus system according to the present invention is useful in that the ventilation system can maintain an amount of ventilation and comfort even when a ventilation apparatus that cannot be used temporarily due to a failure or an abnormality is present in a room space, and is particularly suitable for use as a system that provides ventilation in an office, a school class room, or other spaces in which a plurality of ventilation apparatuses and a central controller are placed.

Note that the configurations described in the foregoing embodiments are examples of the present invention; combining the present invention with other publicly known techniques is possible, and partial omissions and modifications are possible without departing from the spirit of the present invention.

### Reference Signs List

1a, 1b, 1c, 1d, 1e ventilation apparatus; 2a, 2b, 2c, 2d, 2e control circuit; 3 central controller; 4 communication cable; 5a, 5b, 5c, 5d, 5e fan; 6a, 6b, 6c, 6d, 6e local remote controller; 19 processing circuit; 19a program; 31 information storage unit; 32 communication unit; 33 control unit; 34 necessary amount of ventilation; 35 amount-of-airflow information; 36 power consumption information; 37 operation history information; 38 installation position information; 41 communication device; 191 arithmetic unit; 192 memory; 193 storage device.

## Claims

1. A ventilation system comprising:
a plurality of ventilation apparatuses that have operation power in a plurality of notches; and
a controller to control the ventilation apparatuses, wherein
the controller comprises a control unit to perform control such that, when interruption of any of the ventilation apparatuses is detected, operation power of a ventilation apparatus that is not interrupted among the ventilation apparatuses is raised and, when resolution of the interruption of the any of the ventilation apparatuses is detected, the operation power of the ventilation apparatus is restored to the operation power used before raising.

2. The ventilation system according to claim 1, wherein, when the control unit is notified of occurrence of a failure by any of the ventilation apparatuses, the control unit raises operation power of a ventilation apparatus that does not indicate occurrence of a failure among the ventilation apparatuses and, when the control unit is notified that the failure is resolved, the control unit restores the operation power of the ventilation apparatus to the operation power used before raising.

3. The ventilation system according to claim 1, wherein, when any of the ventilation apparatuses stops operating temporarily or starts intermittent operation control, the control unit raises operation power of a ventilation apparatus that has not stopped operating temporarily or is not performing the intermittent operation control among the ventilation apparatuses and, when the temporary stop or the intermittent operation control is ended, the control unit restores the operation power of the ventilation apparatus to the operation power used before raising.

4. The ventilation system according to claim 1, wherein, when energization of any of the ventilation apparatuses is interrupted, the control unit raises operation power of a ventilation apparatus that has not interrupted energization among the ventilation apparatuses and, when interruption of the energization is resolved, the control unit restores the operation power of the ventilation apparatus to the operation power used before raising.

5. A ventilation system comprising:
a plurality of ventilation apparatuses that have operation power changeable to a plurality of levels; and
a controller to control the ventilation apparatuses, wherein
the controller comprises:
an information storage unit to store amount-of-airflow information that indicates a relationship between operation power and an amount of ventilation of the ventilation apparatuses; and
a control unit to perform control such that, when interruption of any of the ventilation apparatuses is detected, a combination of operation power of ventilation apparatuses that are not interrupted among the ventilation apparatuses is changed on a basis of the amount-of-airflow information so as to make up for a deficit in an amount of ventilation caused by the interruption and, when resolution of the interruption of the any of the ventilation apparatuses is detected, the changed combination of the operation power of the ventilation apparatuses is restored to the combination used before changing.

6. The ventilation system according to claim 5, wherein the control unit selects a combination of operation power in such a manner that an increase in amount of ventilation obtained by changing the combination of the operation power of the ventilation apparatuses is an amount of airflow that is equal to or greater than the deficit in an amount of ventilation caused by the interruption of the any of the ventilation apparatuses and that is closest to the deficit in an amount of ventilation.

7. The ventilation system according to claim 5, wherein the control unit selects a combination of operation power that minimizes power consumption of the ventilation apparatuses that are operating.

8. The ventilation system according to claim 5, wherein
the control unit comprises an operation history information storage unit to store operation history information that associates the operation power of the ventilation apparatuses with operating time of the ventilation apparatuses, and
the control unit selects a combination of operation power in such a manner that low priority is given to a combination in which a ventilation apparatus that operates at highest operation power for a longest operating time among the ventilation apparatuses is caused to operate at highest operation power.

9. The ventilation system according to any one of claims 5 to 8, wherein
the controller comprises an installation position information storage unit to store installation position information that indicates an installation position of the ventilation apparatuses, and
when any of the ventilation apparatuses is interrupted, the control unit preferentially raises operation power of a ventilation apparatus that is closer in distance to the any of the ventilation apparatuses that is interrupted among the ventilation apparatuses, and changes the combination of the operation power of the ventilation apparatuses.

10. A controller that controls a plurality of ventilation apparatuses having operation power in a plurality of notches, the controller comprising a control unit to perform control such that, when interruption of any of the ventilation apparatuses is detected, operation power of a ventilation apparatus that is not interrupted among the ventilation apparatuses is raised and, when resolution of the interruption of the any of the ventilation apparatuses is detected, the operation power of the ventilation apparatus is restored to the operation power used before raising.

11. A controller that controls a plurality of ventilation apparatuses having operation power changeable to a plurality of levels, the controller comprising:
an information storage unit to store amount-of-airflow information that indicates a relationship between operation power and an amount of ventilation of the ventilation apparatuses; and
a control unit to perform control such that, when interruption of any of the ventilation apparatuses is detected, a combination of operation power of ventilation apparatuses that are not interrupted among the ventilation apparatuses is changed on a basis of the amount-of-airflow information so as to make up for a deficit in an amount of ventilation caused by the interruption and, when resolution of the interruption of the any of the ventilation apparatuses is detected, the changed combination of the operation power of the ventilation apparatuses is restored to the combination used before changing.
